# EUROPEAN PATENT APPLICATION

(11) **EP 2 286 972 A1**
(43) Date of publication of application: **23.02.2011**
(21) Application number: 09754534.7
(22) Date of filing: 27.04.2009
(51) Int. Cl.: B28D 5/00, B24B 9/00, B24B 9/10, C03B 33/023, C03B 33/09

(54) **METHOD FOR CHAMFERING BRITTLE MATERIAL SUBSTRATE**

(30) Priority: 30.05.2008 JP 2008142394
(71) Applicant: Mitsuboshi Diamond Industrial Co., Ltd., Suita-city, Osaka 564-0044 (JP)
(72) Inventor: MAEKAWA,Kazuya, Suita-city Osaka 564-0044 (JP); SAKAGUCHI,Ryota, Suita-city Osaka 564-0044 (JP); NAKAGAKI,Tomoki, Siuta-city Osaka 564-0044 (JP)
(74) Representative: Beetz & Partner
(86) International application number: PCT/JP2009/058253
(87) International publication number: WO 2009/145026

(57) **Abstract**

[Summary]

[Issue] A chamfering method is provided that can be conducted even in small worksite space without using grinding members and without requiring a cleaning process after a chamfering process.

[Resolution Means] A brittle material substrate chamfering method according to the present invention includes steps of drawing a scribing line, and heating and/or cooling a part in proximity to the scribing line. The scribing line is drawn on a part of a surface of a brittle material substrate that extends along the edge of the brittle material substrate and has a width not more than 50% of the thickness of the brittle material substrate starting from the edge of the brittle material substrate whereby forming a crack inclined from the surface of the substrate toward a side end surface of the substrate. A part in proximity to the scribing line is heated and/or cooled so that a corner part of the edge of said brittle material substrate is cut out whereby chamfering said brittle material substrate. In the step of drawing a scribing line on the part of a surface of a brittle material substrate, a cutter wheel is preferably used that has a plurality of inclined grooves along the circumferential edge line as cutting edge. The inclined grooves are inclined at a predetermined angle relative to the axial direction of the cutter wheel.

## Description

### [Technical Field]

The present invention relates to a method for chamfering a brittle material substrate such as glass substrate.

### [Background Information]

Glass substrates are one of the types of brittle material substrates. Glass substrates are widely used for flat panel display (FPD) such as liquid crystal display panel (LCD) and plasma display panel (PDP). In FPDs, a pair of large mother glass substrates are laminated onto each other, and are then cut into a pair of smaller glass substrates with predetermined sizes. Typically, a pair of mother glass substrates are cut into a pair of smaller glass substrates with predetermined sizes by a scribing and breaking method. In the scribing and breaking method, for example, a cutter wheel is brought into press contact with and is rotated on a glass substrate to draw a scribe line on the glass substrate so that a crack is formed perpendicular to the surface of the glass substrate (scribing process), and subsequently an external force is applied to the glass substrate so that the perpendicular crack reaches the back surface of the glass substrate (break process) whereby cutting the glass substrate into a smaller glass substrate.

In the case where a glass substrate is cut into a smaller glass substrate by the scribing and breaking method, when the smaller glass substrate is formed by cutting the glass substrate, the edge of the smaller glass substrate occasionally becomes chipped. Thus, a glass fragment can be produced from the chipped part, micro-cracks, or the like. Such a glass fragment produced from the chipped part may cause defects such as a surface flaw in a substrate of FDP. Accordingly, after the smaller glass substrate is formed by cutting the glass substrate, the edge of the smaller glass substrate is generally grinded by a grinding member such as grindstone to chamfer the edge of the smaller glass substrate.

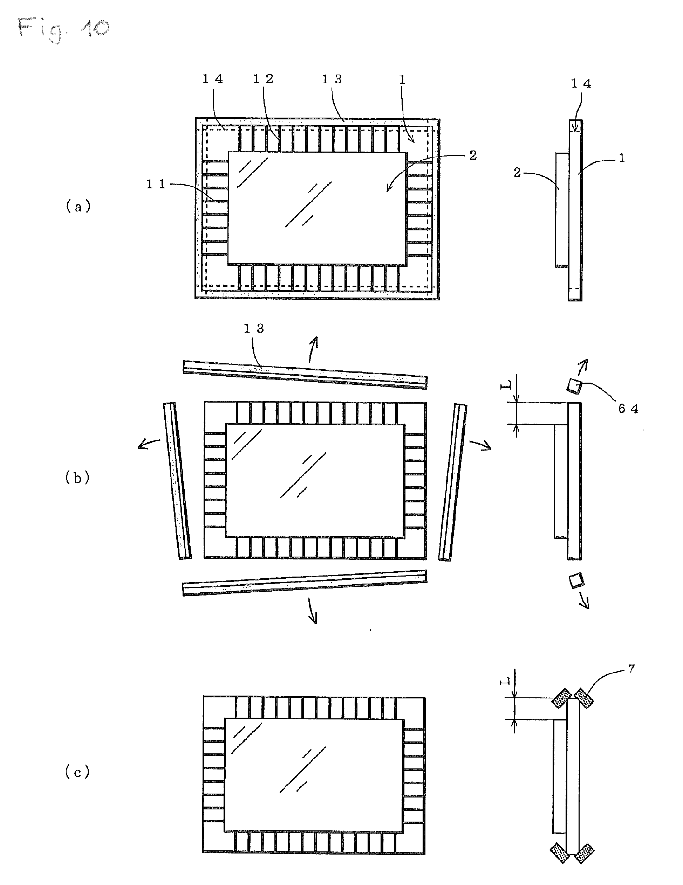

Fig. 10 shows exemplary processes. Fig. 10(a) shows a front view and a right side view of an LCD in a manufacture process. The LCD is composed of a TFT substrate 1 and a CF substrate 2. Although not illustrated, thin film transistors (TFTs) are arranged on the TFT substrate 1. Although not illustrated, a color filter (CF) is arranged on the CF substrate 2. The CF substrate 2 is spaced at a very small gap away from the TFT substrate 1, and is laminated onto the TFT substrate 1 by a sealing member (not shown) that is arranged on the periphery of the CF substrate 2. Gate wiring lines 11, source wiring lines 12 and a short-circuit ring portion 13 are arranged in the outer rim portion of the surface of the TFT substrate 1. The short-circuit ring portion 13 short-circuits the gate wiring lines 11 and the source wiring lines 12 to prevent that the TFTs fail due to static electricity discharge, or the like. The short-circuit ring portion 13 is cut out and removed by the scribing and breaking method before the final inspection of the LCD (Fig. 10(b)). After that, the edges of the thus-divided TFT substrate 1 are chamfered by grindstones 7 (Fig. 10(c)).

However, in recent years, there is a trend to increase the display screen size of LCD and reduce the outer periphery portion of the display screen. Correspondingly, an outer peripheral part L of the TFT substrate 1 becomes narrower that protrudes from the CF substrate 2. As the outer peripheral part L of the TFT substrate 1 becomes narrower, it is hard to provide enough space to grind the cut end surfaces of the TFT substrate 1 by using the grindstones 7.

Also, in the process in that glass substrates are chamfered by grinding members, since grinding members produce very small glass powder when grinding and removing the glass substrates, the very small glass powder may cause worksite environment deterioration. In addition, in order to remove very small glass powder that adheres on the glass substrate, it is necessary to clean the glass substrate after the chamfering process.

### [Prior Art Document]

### [Patent Document]

[Patent Document 1] Japanese Patent Laid-Open Publication No. H08-6069.

### [Summary of the Invention]

### [Problems Solved by the Invention]

The present invention is aimed at solving the problem in the conventional art. It is an object of the present invention it to provide a chamfering method that can be conducted even in small worksite space without using grinding members and without requiring a cleaning process after a chamfering process.

### [Means to Solve the Problems]

A brittle material substrate chamfering method according to the present invention includes steps of drawing a scribe line, and heating and/or cooling a part in proximity to the scribe line. The scribe line is drawn on: a part of a surface of a brittle material substrate that extends along the edge of the brittle material substrate and has a width not more than 50% of the thickness of the brittle material substrate starting from the edge of the brittle material substrate whereby forming a crack inclined from the surface of the substrate toward a side end surface of the substrate. A part in proximity to the scribe line is heated and/or cooled so that a corner part of the edge of said brittle material substrate is cut out whereby chamfering said brittle material substrate.

In this method, in order to more surely form the inclined crack, the scribe line can be drawn on said part of a surface of a brittle material substrate by a cutter wheel that includes two outer peripheral portions having a common rotation axis. The two outer peripheral portions have cone shapes or truncated cone shapes. The bottom surfaces of the cone shapes or truncated cone shapes are integrally formed so that a circumferential edge line as a cutting edge is formed. In addition, a plurality of inclined grooves can be formed along said circumferential edge line and inclined from said circumferential edge line toward one of the outer peripheral portions. It is preferable that said plurality of inclined grooves have the same shape on said circumferential edge line. In addition, the scribing movement direction of said cutter wheel can be specified so that one side of each of said inclined grooves with larger width and depth is located on the edge side of said brittle material substrate.

Also, in this method, in order to more surely form the inclined crack, the scribe line can be drawn on said part of a surface of a brittle material substrate by a cutter wheel that includes two outer peripheral portions having a common rotation axis. The two outer peripheral portions have cone shapes or truncated cone shapes, and the bottom surfaces of the cone shapes or truncated cone shapes are integrally formed so that a circumferential edge line as a cutting edge is formed. The two outer peripheral portions have different angles from each other relative to said circumferential edge line.

Each of the outer peripheral portions of said cutter wheel can be formed so as to have two angles by grinding.

The scribe line drawn on said part of a surface of a brittle material substrate can be at least one of straight line, closed curve and unclosed curve.

In the case where said brittle material substrate is a flat display panel glass substrate that has a short-circuit ring portion formed along the edges of this glass substrate, it is preferable that said short-circuit ring portion be cut out together with the corner part by the aforementioned method.

### [Effects of the Invention]

According to a chamfering method of the present invention, since a brittle material substrate can be chamfered without using grinding members, conventional cleaning processes are not required after the chamfering process. Also, since grinding members are not used, a brittle material substrate can be chamfered even in small worksite space.

### [Brief Description of the Drawings]

[Fig. 1] Process chart showing an exemplary chamfering method according to the present invention.
[Fig. 2] Schematic view showing a scribing process.
[Fig. 3] Schematic view showing a scribing process using another cutter wheel.
[Fig. 4] Enlarged view illustrating the cutting edge of the cutter wheel.
[Fig. 5] Enlarged view showing the cutting edge of a cutter wheel with inclined grooves.
[Fig. 6] Enlarged view showing the cutting edge of a cutter wheel that has two outer peripheral portions with different angles from each other relative to the circumferential edge line of the cutter wheel.
[Fig. 7] Process chart showing another exemplary chamfering method according to the present invention.
[Fig. 8] Schematic view showing a chamfering processing according to an example 1.
[Fig. 9] Schematic view showing a chamfering processing according to a comparative example 1.
[Fig. 10] Process chart showing conventional LCD manufacturing processes.

### [Description of the Reference Numerals]

- 1: TFT Substrate (Brittle Material Substrate)
- 2: CF Substrate (Brittle Material Substrate)
- 4: Cutter Wheel
- C: Crack
- a: Substrate Thickness
- b₁, b₂: Distance from Substrate Edge
- 11: Glass Substrate
- 42: Inclined Groove

### [Mode for Carrying out the Invention]

The following description will describe a chamfering method according to the present invention with reference to drawings. However, the present invention is not limited to their embodiment.

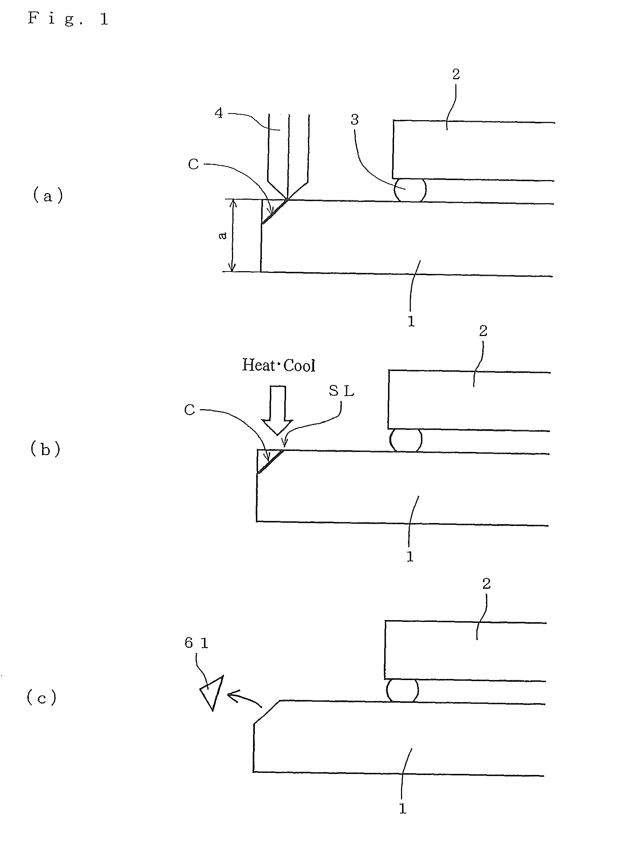

Fig. 1 is a process chart showing a chamfering method according an embodiment of the present invention. An LCD shown in Fig. 1 is composed of a TFT substrate 1 and a CF substrate 2. The CF substrate 2 is spaced at a very small gap away from the TFT substrate 1, and is laminated onto the TFT substrate 1. The outer peripheral part of the TFT substrate 1 is chamfered as shown in the process chart of Fig. 1. First, scribe lines are drawn by a cutter wheel on a predetermined part of a surface of the TFT substrate 1 of a brittle material substrate that extends along the edge of the TFT substrate 1 and has a predetermined width starting from the edge of the TFT substrate 1 (Fig. 1(a)). It is important to draw the scribe line by using the cutter wheel 4 at a position in an area of the surface of the TFT substrate 1 that has a width not more than 50% of the thickness of the TFT substrate 1 starting from the edge of TFT substrate 1. Thus, crack lines C are formed inclined from the surface toward the side end surfaces of the TFT substrate 1. In the case where the scribe line is drawn at a position in an area of the surface of the TFT substrate 1 that has a width more than 50% of the thickness of the TFT substrate 1 starting from the edge of TFT substrate 1, the crack C cannot be formed so as to be inclined toward the side end surface of the TFT substrate 1 but is formed extending in substantially the vertical direction in the scribing process. In this case, the TFT substrate 1 cannot be chamfered. It is preferable that the scribe line be drawn at a position in an area of the surface of the TFT substrate 1 that has a width of 10% to 50% of the thickness of the TFT substrate 1 starting from the edge of TFT substrate 1.

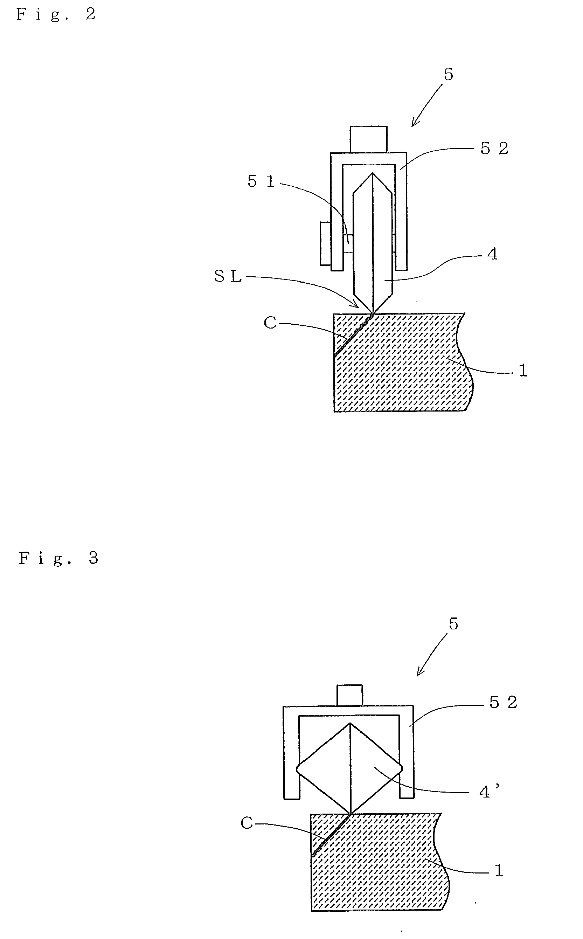

The scribing process is now described using the cutter wheel 4. Fig. 2 is a schematic view showing a cutter head 5 with the cutter wheel 4 attached thereto. The cutter wheel 4 is attached to a supporting frame member of the cutter head 5 to be rotatably supported by a shaft 51. The cutter wheel 4 has two truncated cone shapes having a common rotation axis. The bottom surfaces of the truncated cone shapes are integrally formed so that a circumferential edge line as a cutting edge is formed. The cutter head 5 is mounted to a scribing device. The cutter wheel 4 rotates and moves on the surface of the substrate 1 in press contact with the TFT substrate 1. Thus, a scribe line SL is formed on the substrate 1 so that an inclined crack C is formed. A load applied to the cutter wheel 4 and scribing speed of the cutter wheel 4 can be suitably determined in accordance with the type, the thickness and the like of the substrate 1. Typically, a load applied to the cutter wheel 4 can be 0.05 to 0.4 MPa, and scribing speed of the cutter wheel 4 can be 10 to 500 mm/sec.

In addition to the cutter wheel 4, known cutter wheels can be used and attached to the cutter head 5 shown in Fig. 2. For example, an example of known cutter wheels can be provided by a cutter wheel 4' shown in Fig. 3 that has two cone shapes having a common rotation axis. The bottom surfaces of the cone shapes of the cutter wheel 4' are integrally formed so that a circumferential edge line as a cutting edge is formed. The cutter wheel preferably has an outer diameter in a range 1 to 10 mm. If the cutter wheel has an outer diameter smaller than 1 mm, the handleability and the durability of the cutter wheel will decrease. If the cutter wheel has an outer diameter larger than 10 mm, the inclined crack may not be deeply formed in the scribing process. The cutter wheel more preferably has an outer diameter in a range 1 to 5 mm.

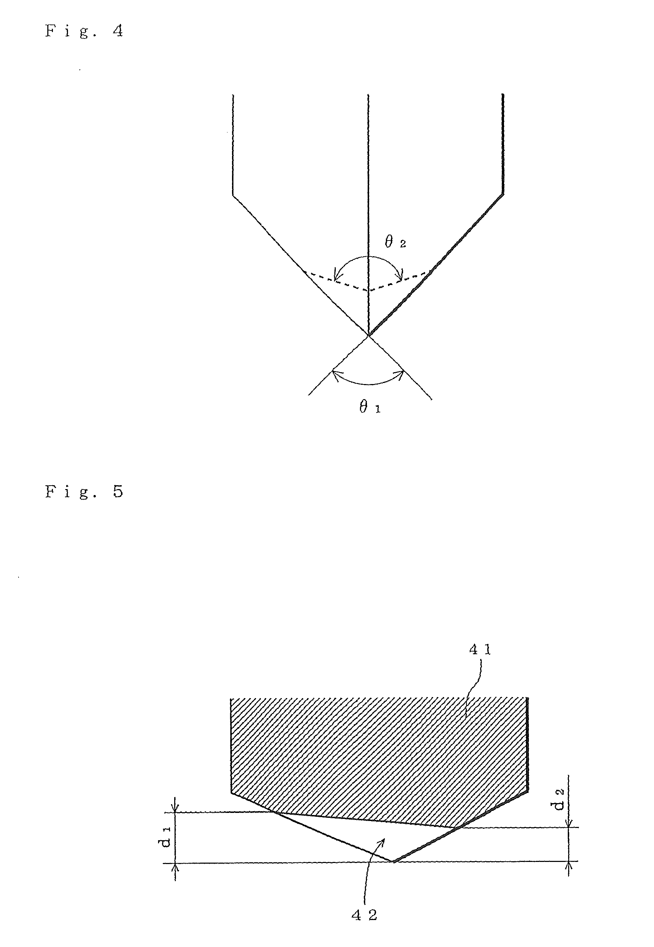

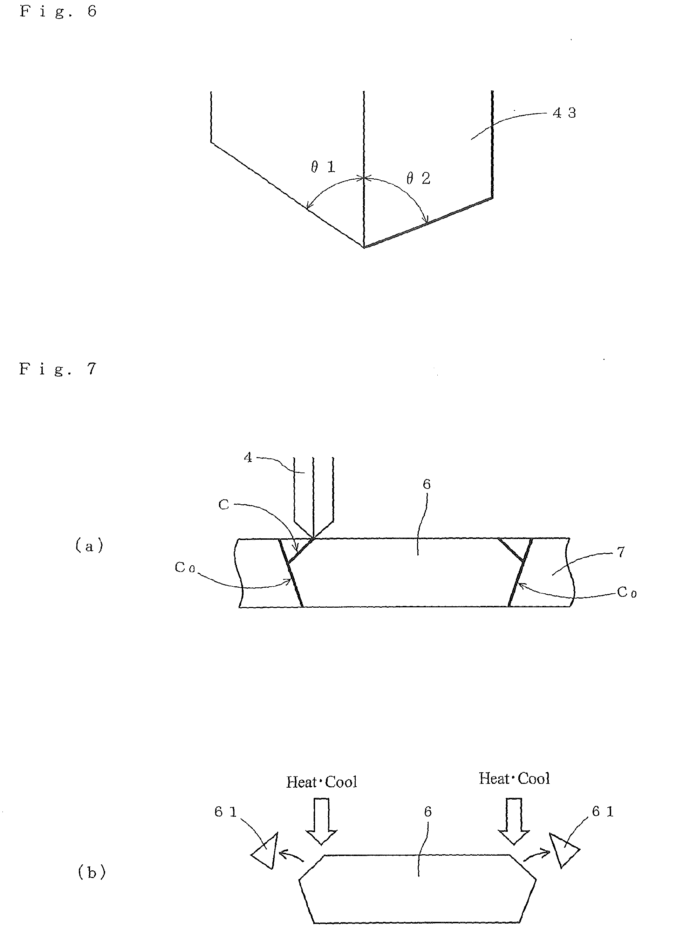

The cutting edge of the cutter wheel can be formed as follows. For example, as shown in Fig. 4, the cutting edge of the cutter wheel is first roughly grinded at an edge angle of Θ₁. In the cutter wheel with the edge angle of Θ₁ is required, the cutting edge of the cutter wheel is finely grinded, and is then provided with later-discussed inclined grooves that are formed along the cutting edge if necessary. On the other hand, in the case where the cutter wheel of an edge angle of Θ₂ is required, the roughly-grinded cutter wheel with the edge angle of Θ₁ is finely grinded so that the edge angle with the edge angle of Θ₂ is formed (dashed lines in Fig. 4). After that, the later-discussed inclined grooves are formed similar to the aforementioned inclined groove formation if necessary. In the case where the cutter wheel is aimed at being used after the cutting edge with two edge angles is formed by two grinding stages, If a plurality of the cutter wheels are stocked that have previously grinded at the edge angle of Θ₁, the cutter wheels with different edge angles can be provided within a short time only by finely grinding their cutting edges. Therefore, it is possible to shorten delivery times, and additionally to produce small batches of a variety of products. The aforementioned two-grinding-stage method can be applied to the cutter wheel shown in Figs 3 and the later-discussed cutting wheel shown in Fig. 6.

In order to form the crack C, which is inclined relative to the substrate surface, it is preferable that inclined grooves 42 be formed along the cutting edge of a wheel main body 41 at a predetermined inclination angle relative to the axial direction of the cutter wheel 4. The interval between the inclined grooves 42 preferably falls within a range of 20 to 200 µm. As for the depths at the both ends of the inclined groove 42, it is preferable that a depth d₁ fall within a range of 2 to 2500 µm, and a depth d₂ fall within a range of 1 to 20 µm. The inclined groove 42 can have various shapes such as U shape, V shape, saw-teeth shape, and rectangular recessed shape as viewed from the lateral side. When a scribe line is drawn by using this cutter wheel 4, the crack C is formed inclined downward toward the left side in the Figure.

In the case where the cutter wheel shown in Fig. 6 is alternatively used that has two outer peripheral portions with different edge angles relative to the edge line of the cutting edge, the crack C can be formed inclined relative to the substrate surface. When a scribe line is drawn by using a cutter wheel 43 shown in Fig. 6, the crack C is formed inclined downward toward the left side in the Figure similar to the cutter wheel shown in Fig. 5. The inclination of the crack C is generally proportional to the difference of the left and right edge angles relative to the edge line of the cutting edge. The inclination of the crack C will increase with the difference of the left and right edge angles.

Even in the case where a cutter wheel is used that has the same left and right edge angles relative to the edge line of the cutting edge, when a scribe line is drawn with the edge line of the cutter wheel being inclined relative to the substrate, the crack can be formed inclined relative to the substrate surface.

Subsequently, as shown in Fig. 1(b), according to the chamfering method of the present invention, the scribe line SL and a part in proximity to the scribe line SL are heated and/or cooled. Expansion or contraction difference is produced in the thickness direction of the TFT substrate 1 by heating and/or cooling the TFT substrate 1. Accordingly, the crack C will extend and reach the side end surface of the substrate 1. As a result, a corner part of the edge of the TFT substrate 1 can be cut out. In addition, in order that the crack C can surely extend and, reach the side end surface of the substrate, it is preferable that the substrate be heated and then cooled.

A known means can be used for heating and cooling the substrate. For example, examples of the heating means can be provided by laser heating, steam heating, infrared radiation heating by halogen heater, and the like. For example, examples of the cooling means can be provided by discharge of gas and liquid cooling mediums such as carbon dioxide, nitrogen, helium, water, and the like.

As shown in Fig. 1(c), the corner part of the edge is cut out from the TFT substrate 1, and is retrieved as cullet 61 by suction. The corner part of the edge of the TFT substrate 1 is thus cut out in the previous heating and/or cooling process, and is removed from the TFT substrate by its own weight. If the corner part of the edge is insufficiently removed, an external force may be applied to the corner part of the edge to sufficiently remove the corner part of the edge.

Although the chamfering method according to the present invention has been illustratively described to be applied to a method for chamfering a TFT substrate of LCD, the chamfering method according to the present invention can be applied to methods for chamfering brittle material substrates such as glass substrate of FPDs (e.g., PDPs). In addition to the glass substrate, examples of the brittle material substrates to be chamfered by the chamfering method of the present invention can be provided by various types of substrates such as ceramic, silicon and sapphire substrates.

In addition, the chamfering method according to the present invention can be applied to a product that has an edge line of closed curve.
Fig. 7 shows exemplary processes. As shown in Fig. 7(a), a patterning scribe line is drawn along the pattern of a product 6 that will have an edge line of closed curve on a glass substrate 7. Subsequently, a chamfering scribe line is drawn by using the cutter wheel 4. After that, a crack Co extends from the patterning scribe line along the pattern of the product 6. Thus, the product 6 can be lifted out from the glass substrate 7. Subsequently, as shown in Fig. 7(b), the edge of the product 6 is heated and/or cooled so that the corner part of the edge is cut out along a crack C. After that, the corner part is retrieved as cullet 61 by suction. Alternatively, the chamfering scribe line can be drawn in the product 6 after the product 6 is lifted out from the glass substrate 7. After that, the edge can be heated and/or cooled so that the corner part of the edge is cut out.

### [Example]

The following description will describe a chamfering method according to an example of the present invention. However, the present invention is not limited to the example.

### Example 1

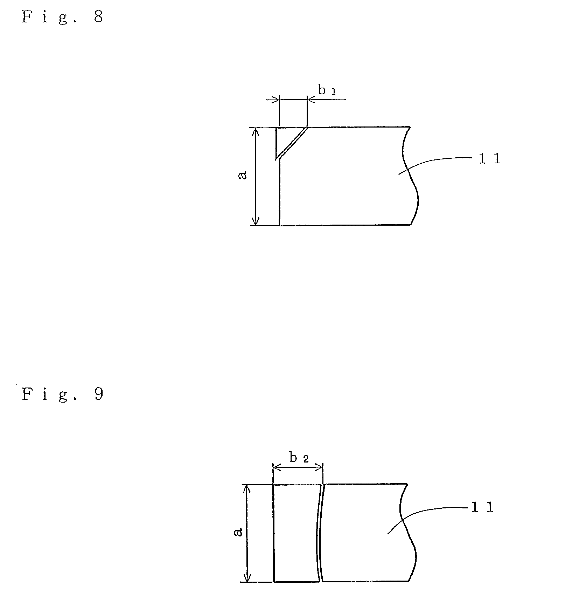

As shown in Fig. 8, a scribe line was drawn by using a cutter wheel shown in specifications of Table 1 at a position spaced away from an edge of a glass substrate 11 with thickness a of 0.7 mm at a distance b₁ of 0.3 mm (43% of the thickness of the glass substrate) along the edge. The scribing conditions were cutting edge load of 0.14 MPa, and scribing speed of 300 mm/sec. Steam with temperature of about 100°C was discharged toward the scribe line for five seconds so that the scribe line was heated whereby chamfering the glass substrate 11. As a result, as shown in Fig. 8, the corner part of the edge of the glass substrate 11 was diagonally cut out so that the glass substrate 11 was chamfered.

**[Table 1]**

| Specifications of Cutter Wheel | |
|---|---|
| Outer Diameter (mm) | 2.0 |
| Thickness (mm) | 0.65 |
| Material | Cemented Carbide |
| Cutting Edge Angle (°) | 115 |
| Groove Depth d1 (µm) | 11 |
| Groove Depth d2 (µm) | 7 |
| Groove Interval (µm) | 47 |

### Comparative Example 1

As shown in Fig. 9, a scribe line was drawn and was then heated similarly to the example 1 except that a scribing position was spaced away from an edge of a glass substrate 11 at a distance b₂ of 0.5 mm (71% of the thickness of the glass substrate). As a result, as shown in Fig. 9, the corner part of the edge of the glass substrate 11 was substantially vertically cut out.

### Comparative Example 2

A scribe line was drawn and was then heated similarly to the example 1 except that a scribing position was spaced away from an edge of a glass substrate at a distance of 0.7 mm (100% of the thickness of the glass substrate). As a result, the corner part of the edge of the glass substrate was vertically cut out similar to the comparative example 1.

### [Industrial Applicability]

According to a chamfering method of the present invention, since a brittle material substrate can be chamfered without using grinding members, the chamfering method of the present invention is useful.

## Claims

1. A brittle material substrate chamfering method comprising the steps of:
drawing a scribe line on a part of a surface of a brittle material substrate that extends along the edge of the brittle material substrate and has a width not more than 50% of the thickness of the brittle material substrate starting from the edge of the brittle material substrate whereby forming a crack inclined from the surface of the substrate toward a side end surface of the substrate; and
heating and/or cooling a part in proximity to the scribe line so that a corner part of the edge of said brittle material substrate is cut out whereby chamfering said brittle material substrate.

2. The chamfering method according to Claim 1, wherein the scribe line is drawn on said part of a surface of a brittle material substrate by a cutter wheel that includes two outer peripheral portions having a common rotation axis, wherein the two outer peripheral portions have cone shapes or truncated cone shapes, and the bottom surfaces of the cone shapes or truncated cone shapes are integrally formed so that a circumferential edge line as a cutting edge is formed, wherein a plurality of inclined grooves are formed along said circumferential edge line and inclined from said circumferential edge line toward one of the outer peripheral portions.

3. The chamfering method according to Claim 2, wherein said plurality of inclined grooves have the same shape on said circumferential edge line.

4. The chamfering method according to Claim 2 or 3, wherein the scribing movement direction of said cutter wheel is specified so that one side of each of said inclined grooves with larger width and depth is located on the edge side of said brittle material substrate.

5. The chamfering method according to Claim 1, wherein the scribe line is drawn on said part of a surface of a brittle material substrate by a cutter wheel that includes two outer peripheral portions having a common rotation axis, wherein the two outer peripheral portions have cone shapes or truncated cone shapes, and the bottom surfaces of the cone shapes or truncated cone shapes are integrally formed so that a circumferential edge line as a cutting edge is formed, wherein the two outer peripheral portions have different angles from each other relative to said circumferential edge line.

6. The chamfering method according to any of Claims 2 to 5, wherein each of the outer peripheral portions of said cutter wheel is formed so as to have two angles by grinding.

7. The chamfering method according to any of Claims 1 to 6, wherein the scribe line drawn on said part of a surface of a brittle material substrate is at least one of straight line, closed curve and unclosed curve.

8. The chamfering method according to any of Claims 1 to 7, wherein said brittle material substrate is a flat display panel glass substrate that has a short-circuit ring portion formed along the edges of this glass, substrate, wherein said short-circuit ring portion is cut out simultaneously when the corner part of the edge of the brittle material substrate is cut out.
